# EUROPEAN PATENT SPECIFICATION

(11) **EP 3 220 176 B1**
(45) Date of publication and mention of the grant of the patent: **28.08.2019**
(21) Application number: 17156630.0
(22) Date of filing: 17.02.2017
(51) Int. Cl.: G02B 7/02

(54) **LENS BARREL**
OBJEKTIVTUBUS
BARILLET

(30) Priority: 18.03.2016 JP 2016055025
(43) Date of publication of application: 20.09.2017
(73) Proprietor: Konica Minolta, Inc., Tokyo 100-7015 (JP)
(72) Inventor: Wataru, Kohei, Tokyo, 100-7015 (JP)
(74) Representative: Gille Hrabal

(56) References cited:
- WO-A1-2013/012063
- JP-A- 2003 215 420
- US-A1- 2004 109 243

## Description

### TECHNICAL FIELD

The present invention relates to a lens barrel.

### BACKGROUND ART

In recent years, an imaging lens for a digital camera, particularly an interchangeable lens in a lens interchangeable camera system, has been increasingly required to have higher optical performance. In order to achieve an imaging lens barrel having high optical performance, e.g., a low risk of one-sided blurring, a part of a plurality of lenses constituting an imaging lens system are adjusted in terms of an inclination with respect to an orthogonal-to-optical axis direction, i.e., a direction orthogonal to an optical axis of the lens barrel to thereby maintain the performance.

For example, JP 2009-156960A (Literature 1) discloses a lens barrel constructed such that an inclination of a lens holding member can be adjusted with respect to an optical axis thereof. The lens barrel disclosed in this Literature 1 includes: a barrel body having a fixed tube; a lens holding member fittingly held by the fixed tube; three adjustment screws for coupling the fixed tube and the lens holding member together and adjusting an inclination of the lens holding member with respect to the optical axis; and an annular strip-shaped spacer disposed between the fixed tube and the lens holding member opposed to each other in the optical axis, so as to act as a leaf spring. The adjustment screws are arranged at respective positions equally spaced in a circumferential direction of the fixed tube. Thus, each of the adjustment screws can be appropriately rotated to adjust an optical axis-directional gap between the fixed tube and the lens holding member to thereby adjust an inclination of the lens holding member with respect to an orthogonal-to-optical axis direction.

However, in the Literature 1, by fitting the lens holding member to the fixed tube, the lens holding member is positioned in the orthogonal-to-optical axis direction with respect to the fixed tube. Thus, in the case where each of the lens holding member and the fixed tube is formed to have a diametric dimension falling within a general tolerance, a difference between the diametric dimensions of the lens holding member and the fixed tube is likely to become large. In this case, a clearance or play between the lens holding member and the fixed tube in a radial direction which is the orthogonal-to-optical axis direction becomes large, thereby leading to occurrence of a shift-induced error due to a positional shift (displacement) in the radial direction during the inclination adjustment. When this shift-induced error exerts a significant influence on sensitivity as optical performance, it becomes difficult to perform the adjustment to obtain a desired inclination.

Moreover, in a situation where there is a large radial play, a positional variation of the adjusted lens holding member occurring when the lens barrel receives an impact force becomes large, thereby possibly causing degradation in optical performance. Such a situation can also cause deterioration in repeatability to be obtained when the lens holding member is detached once and attached again in an assembling process.

On the other hand, if the lens barrel is produced to keep down an amount of the radial play with a view to solving the above problems, each of the two components requires a high degree of processing accuracy, resulting in increased production cost. Moreover, in a situation where the radial play is excessively reduced, during the inclination adjustment, the lens holding member is likely to become difficult in relative displacement in a fitted section, and therefore the inclination adjustment hardly realizes a desired inclination, resulting in a risk of deterioration in accuracy of the inclination accuracy. Further prior art can be found in US 2004/109243 A1, WO 2013/012063 A1 and JP 2003 215420 A.

### SUMMARY OF INVENTION

The present invention has been made in view of the above circumstances, and an object thereof is to provide a lens barrel capable of making it possible to set respective positions of a barrel body and a lens holding member in an orthogonal-to-optical axis direction, easily with a high degree of accuracy, and adjust an inclination of the lens holding member with respect to the orthogonal-to-optical axis direction.

The present invention provides a lens barrel as defined in claim 1, including a lens holding member and a barrel body supporting the lens holding member, wherein one of the barrel body and the lens holding member includes a plurality of positioning protrusions for positioning the lens holding member with respect to the barrel body in an orthogonal-to-optical axis direction, and the remaining one of the barrel body and the lens holding member includes a plurality of protrusion receiving holes each receiving therein a respective one of the positioning protrusions, and wherein the protrusion receiving holes include at least one elongate-shaped receiving hole formed to extend in given one direction so as to displaceably receive therein a corresponding one of the positioning protrusions.

These and other objects, features and advantages of the present invention will become more apparent upon reading the following detailed description along with the accompanying drawings.

### BRIEF DESCRIPTION OF DRAWINGS

FIG. 1 is a sectional view of a lens barrel according to one embodiment of the present invention, wherein the lens barrel is in a wide end state.
FIG. 2 is a sectional view of the lens barrel depicted in FIG. 1, wherein the lens barrel is in a telephoto end state.
FIG. 3 is an exploded perspective view of a first lens holding member and a supporting tube in the lens barrel depicted in FIG. 1.
FIG. 4 is a perspective view of an assembled state after the first lens holding member depicted in FIG. 3 is supported by the supporting tube.
FIG. 5 is a back view depicting the assembly in FIG. 4.
FIG. 6 is a sectional view taken along the line VI-VI in FIG. 5.
FIG. 7 is a sectional view taken along the line VII-VII in FIG. 5.
FIG. 8 is an enlarged view of an area A in FIG. 5.
FIG. 9 is a perspective view of a first modification of the assembly of the first lens holding member and the supporting tube.
FIG. 10 is a back view depicting the assembly in FIG. 9.
FIG. 11 is a perspective view of a second modification of the assembly of the first lens holding member and the supporting tube.
FIG. 12 is a back view depicting the assembly in FIG. 11.
FIG. 13 is a sectional view taken along the line XIII-XIII in FIG. 12.
FIG. 14 is an enlarged sectional view of a substantial part of the assembly in the second modification in FIG. 11, for explaining a relationship between an elongate-shaped receiving hole of the first lens holding member and a positioning protrusion.

### DESCRIPTION OF EMBODIMENTS

Based on the drawings, one embodiment of the present invention will now be described. It should be noted that elements or components assigned with the same reference sign in the figures means that they are identical, and therefore duplicated description thereof will be omitted appropriately.

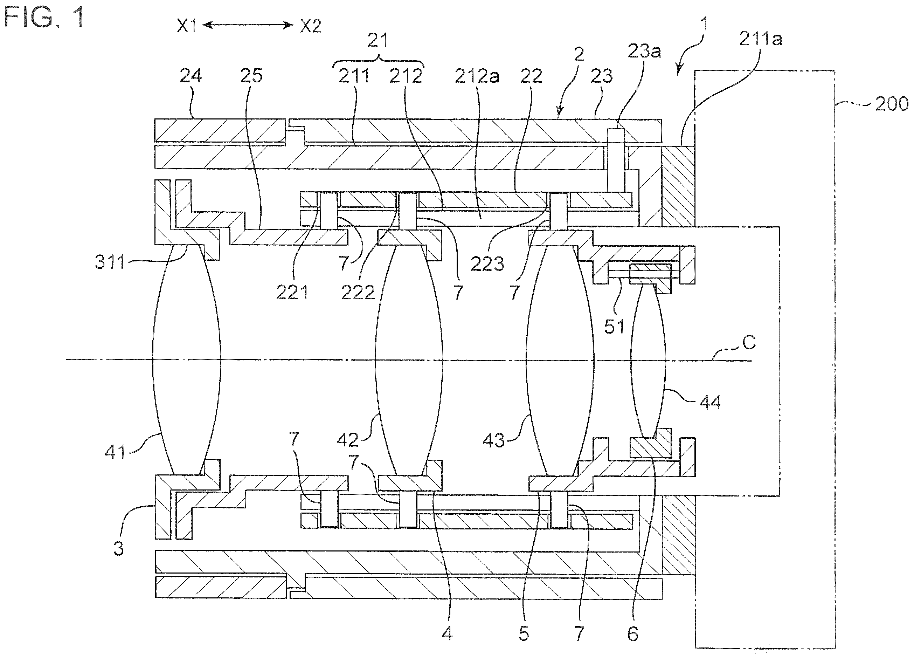

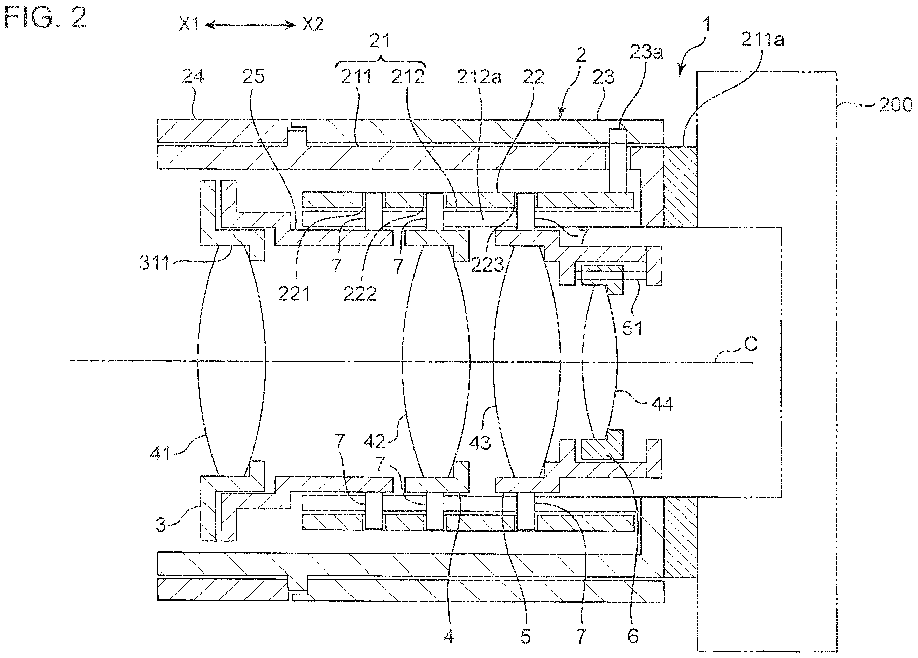

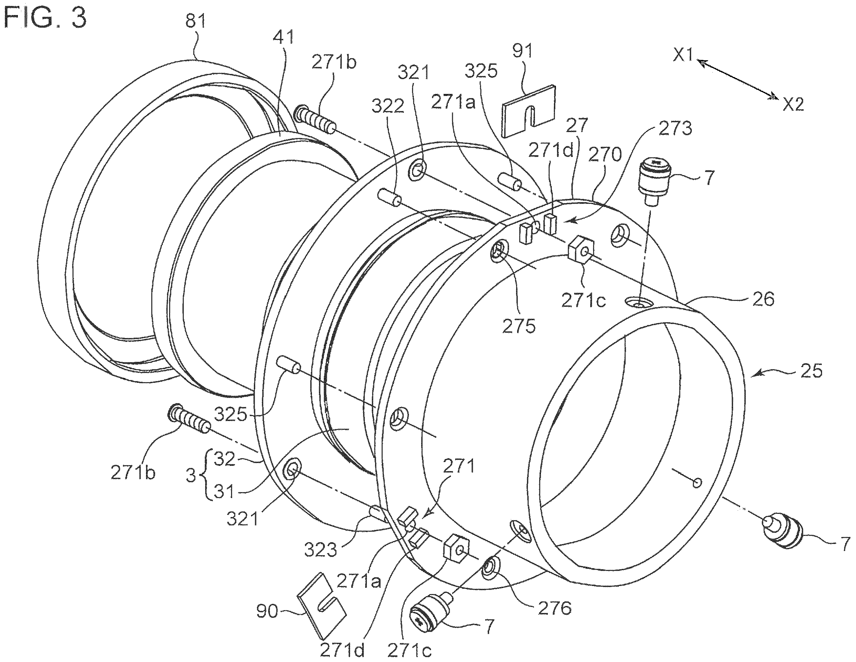

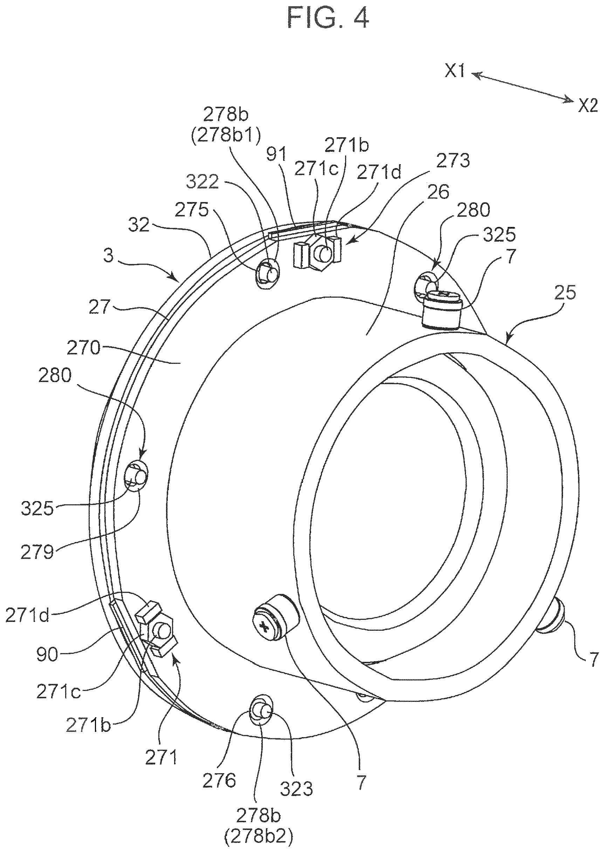

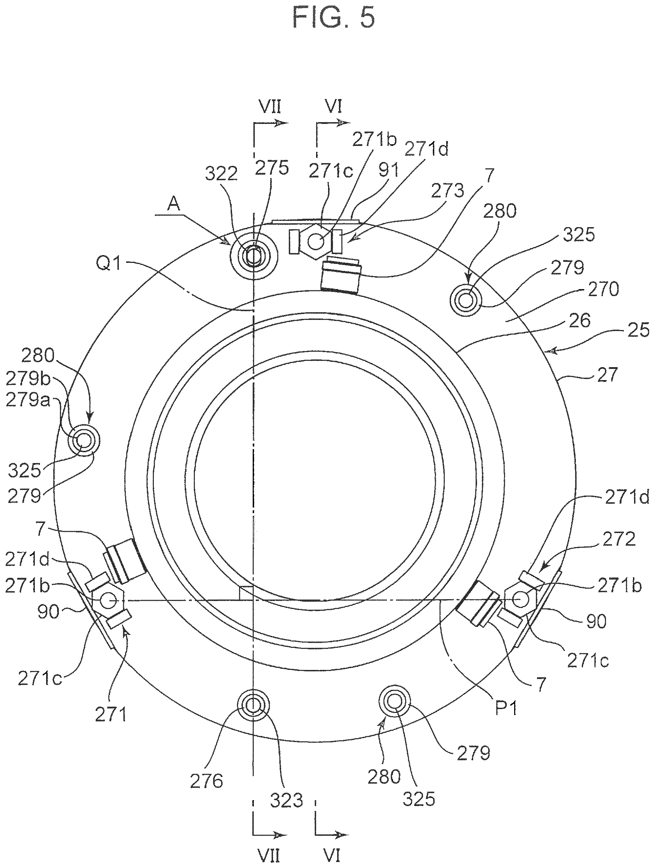

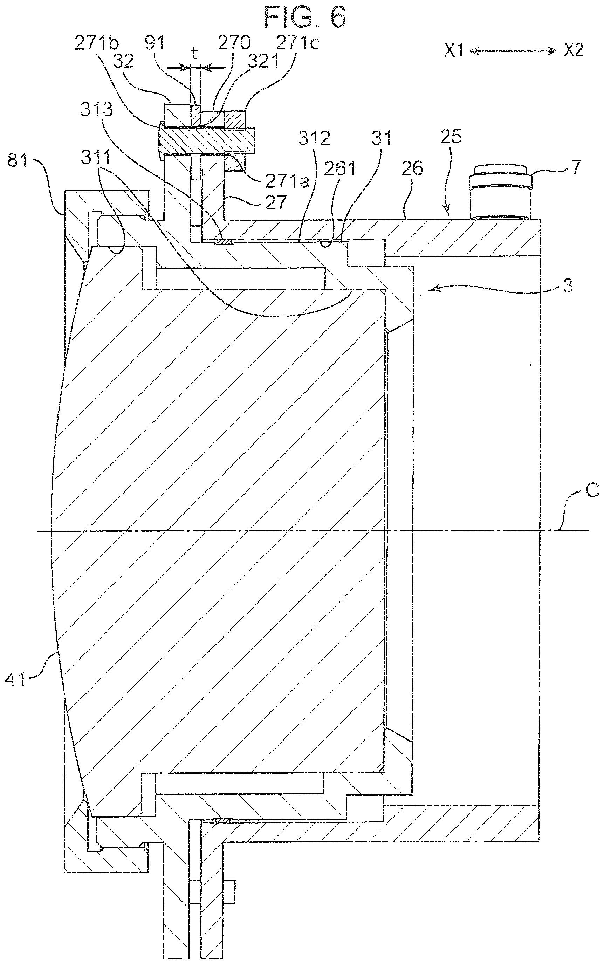

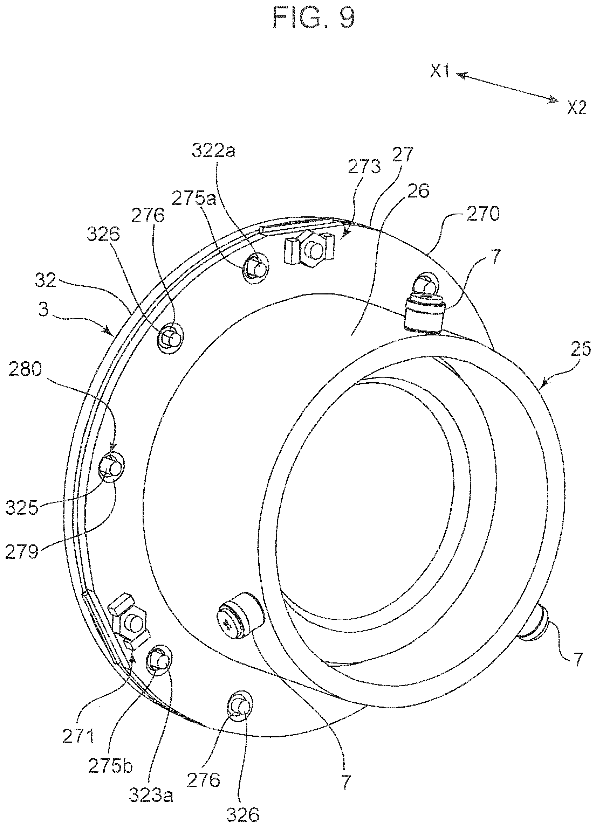

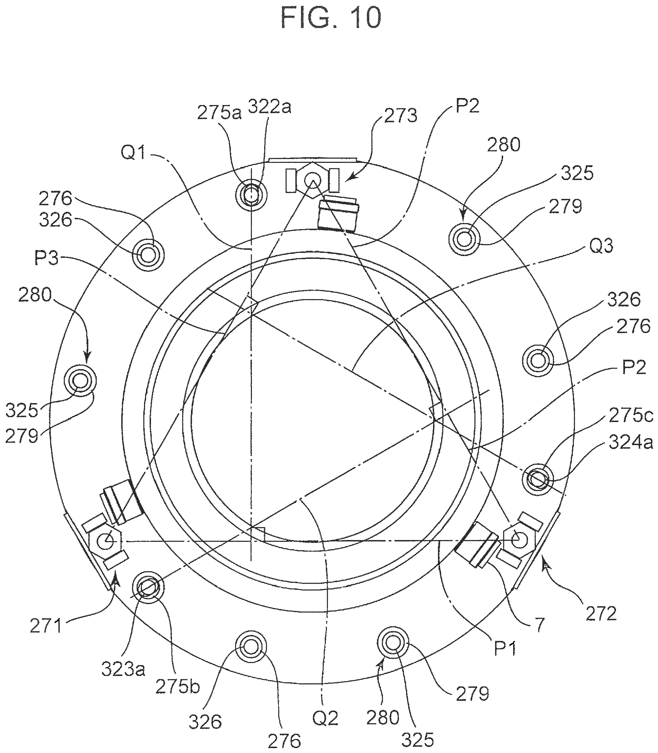

FIG. 1 is a sectional view of a lens barrel according to one embodiment of the present invention, wherein the lens barrel is in a wide end state. FIG. 2 is a sectional view of the lens barrel depicted in FIG. 1, wherein the lens barrel is in a telephoto end state. FIG. 3 is an exploded perspective view of a first lens holding member and a supporting tube in the lens barrel depicted in FIG. 1. FIG. 4 is a perspective view of an assembled state after the first lens holding member depicted in FIG. 3 is supported by the supporting tube. FIG. 5 is a back view depicting the assembly in FIG. 4. FIG. 6, FIG. 7 and FIG. 8 are, respectively, a sectional view taken along the line VI-VI in FIG. 5, a sectional view taken along the line VII-VII in FIG. 5, and an enlarged view of an area A in FIG. 5. FIG. 9 is a perspective view of a first modification of the assembly of the first lens holding member and the supporting tube. FIG. 10 is a back view depicting the assembly in FIG. 9.

The lens barrel 1 according to this embodiment includes a barrel body 2, and a plurality of lens holding members 3 to 6.

The barrel body 2 includes a fixed tube 21, a cam ring 22, a zooming ring 23, a focusing ring 24, and a supporting tube 25.

In this embodiment, the fixed tube 21 includes a first fixed tube 211, and a second fixed tube 212 fixedly coupled to the first fixed tube 211. The first fixed tube 211 is equipped with a mount 211a at an image side (an X2 side) end. This mount 211a is configured to enable a camera body 200 to be detachably attached thereto, i.e., the lens barrel 1 is configured to be mechanically and electrically connected and attached to the camera body 200 through the mount 211a. The second fixed tube 212 is formed with a straight groove 212a along an optical axis C of the lens barrel 1. The second fixed tube 212 is disposed on the side of an inner periphery of the first fixed tube 211 in such a manner that a space for installation of the cam ring 22 is defined between an outer periphery of the second fixed tube 212 and the inner periphery of the first fixed tube 211. In this case, the first fixed tube 211 and the second fixed tube 212 are arranged such that axes thereof are coincident with the optical axis C.

In this embodiment, the cam ring 22 is formed with first to third cam grooves 221, 222, 223. The cam ring 22 is disposed in the space between the inner periphery of the first fixed tube 211 and the outer periphery of the second fixed tube 212 in such a manner as to be rotatable about the optical axis C.

The zooming ring 23 is disposed on an outer periphery of the first fixed tube 211 in such a manner as to be rotatable about the optical axis C. The zooming ring 23 is coupled to the cam ring 22 through a zoom interlocking pin 23a. Thus, when the zooming ring 23 is manually rotated, the cam ring 22 is rotated about the optical axis C, interlockingly with the zooming ring 23.

The focusing ring 24 is disposed on the outer periphery of the first fixed tube 211 at an object side (an X1 side) with respect to the zooming ring 23, in such a manner as to be rotatable about the optical axis C. The focusing ring 24 is electrically connected to a non-depicted photosensor, so that, when the focusing ring 24 is manually rotated, an rotational amount, a rotational direction and the like are detected by the photosensor.

The supporting tube 25 is a member for supporting an aftermentioned first lens holding member 3. As depicted in FIGS. 3 to 7, the supporting tube 25 includes an approximately circular tubular-shaped circular tube portion 26, and a flange portion 27 formed on an outer periphery of the circular tube portion 26.

The circular tube portion 26 is provided with three cam followers 7 which are attached onto an outer periphery on the image side thereof. The cam followers 7 are arranged at even intervals along a circumferential direction of the circular tube portion 26. The circular tube portion 26 is configured such that an inner periphery on the object side thereof serves as a fittingly-receiving section 261 capable of fittingly receiving thereon the aftermentioned first lens holding member 3.

The flange portion 27 includes an approximately circular plate-shaped (ring plate-shaped) flange body 270, a plurality of supporting sections 271 to 273 for supporting the aftermentioned first lens holding member 3, and a plurality of (in this embodiment, two) protrusion receiving holes 275, 276 each for receiving therein a respective one of a plurality of (in this embodiment, two) positioning protrusions 322, 323 of the aftermentioned first lens holding member 3.

The flange body 270 is provided at an object-side edge of the circular tube portion 26 to protrude radially outwardly from the outer periphery of the circular tube portion 26.

In this embodiment, the supporting sections consist of a first supporting section 271, a second supporting section 272 and a third supporting section 273 which are arranged at even intervals along a circumferential direction of the flange portion 27. Each of the first to third supporting sections 271 to 273 takes the same structure. The following description will be made about the first supporting section 271, and description of the second and third supporting sections 272, 273 will be omitted. The first supporting section 271 includes: a supporting hole 271a formed to penetrate through the flange body 270 in the optical axis direction; a supporting bolt 271b penetratingly insertable into the supporting hole 271a; a nut member 271c threadingly engageable with the supporting bolt 271b; and a nut anti-rotation element 271d for preventing rotation of the nut member 271c.

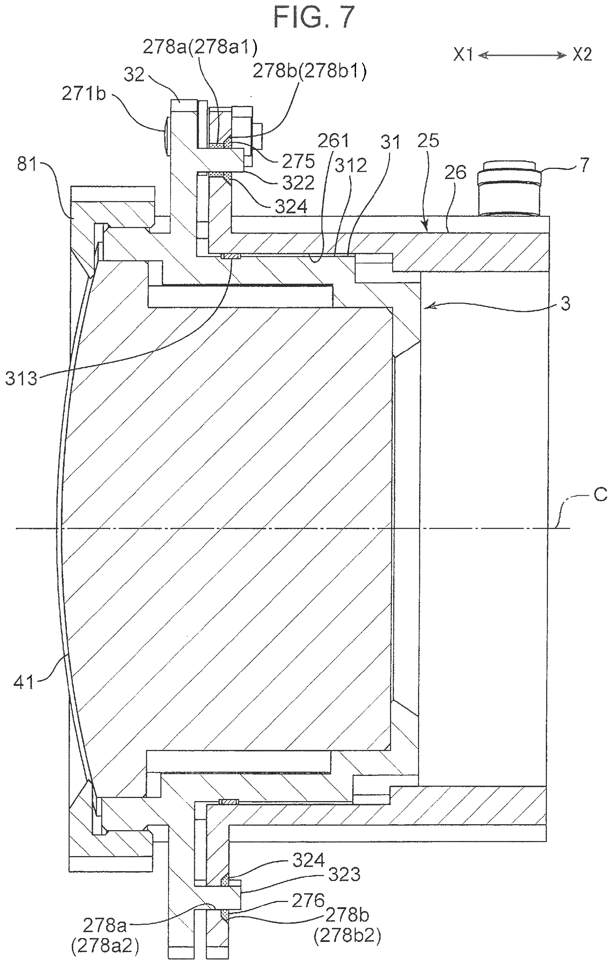

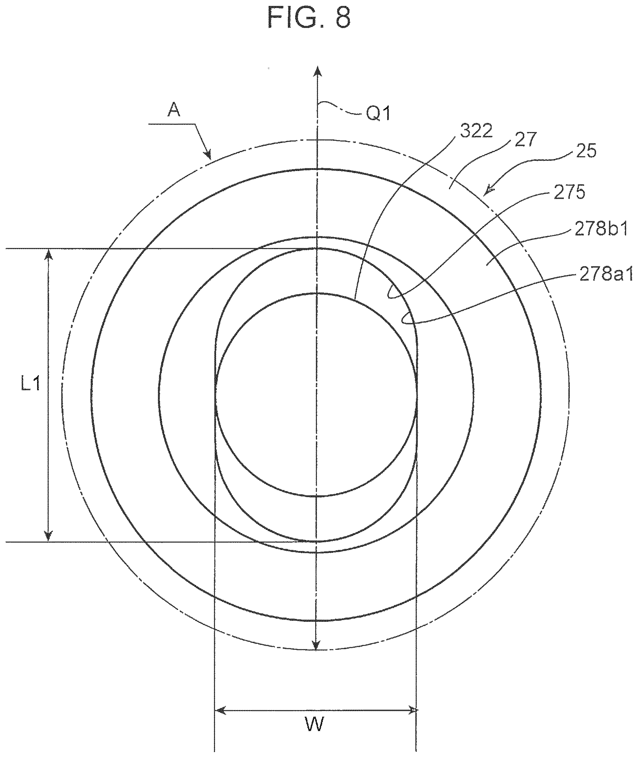

The protrusion receiving holes includes at least one elongate-shaped receiving hole. In this embodiment, the protrusion receiving holes consist of one elongate-shaped receiving hole 275, and one circular-shaped receiving hole 276. As depicted in FIGS. 5 and 8, the elongate-shaped receiving hole 275 is formed to extend in given one direction so as to displaceably receive therein a corresponding one 322 of the positioning protrusions of the aftermentioned first lens holding member 3. In this embodiment, the elongate-shaped receiving hole 275 is formed to have a given width W and extend in a direction Q1 orthogonal to a rotational axis PI connecting the first supporting section 271 and the second supporting section 272. That is, the elongate-shaped receiving hole 275 is formed into an elongate shape in which a length L1 thereof in the one direction which is a longitudinal direction orthogonal to a widthwise direction thereof is greater than the width W. The circular-shaped receiving hole 276 is formed as a hole having a circular shape with a diameter approximately equal to a diameter of a corresponding one 323 of the positioning protrusions of the aftermentioned first lens holding member 3. As depicted in FIG. 7, an inner peripheral wall of each of the elongate-shaped receiving hole 275 and the circular-shaped receiving hole 276 is formed with a fittingly-receiving section 278a (278a1,278a2) capable of fittingly receiving thereon the corresponding positioning protrusion 322 or 323, and an adhesive pool section 278b (278b1,278b2) formed on the image side with respect to the fittingly-receiving section 278a (278a1,278a2), to have a diameter greater than that of the fittingly-receiving section 278a (278a1,278a2).

The adhesive pool section 278b (278b1,278b2) is a section for retaining therein an adhesive. In this embodiment, the adhesive pool section 278b (278b1,278b2) is formed in a taper shape extending from an image-side surface of the flange body 270 to a given depth and having a diameter which gradually increases toward the image side. It should be understood that the shape of the adhesive pool section 278b (278b1,278b2) is not limited to a taper shape, but may be appropriately modified. For example, the adhesive pool section may be formed as a recess obtained by cutting out a part of the inner peripheral wall of the elongate-shaped receiving hole 275 or the circular-shaped receiving hole 276.

Next, the lens holding members 3 to 6 will be described. In this embodiment, as described in FIGS. 1 and 2, the lens holding members consist of a first lens holding member 3, a second lens holding member 4, a third lens holding member 5 and a fourth lens holding member 6, which are arranged in this order in a direction from the object side to the image side.

As depicted in FIGS. 3 to 7, the first lens holding member 3 includes an approximately circular tube-shaped holding member body 31, and a support-target segment 32 supportable by the supporting tube 25.

The holding member body 31 includes a lens holding section 311 for holding at least one lens on the inner periphery thereof. The holding member body 31 is also configured such that an outer periphery on the image side thereof serve as a fittingly-inserting section 312 fittingly insertable into the fittingly-receiving section 261 of the supporting tube 25. By fittingly inserting the fittingly-inserting section 312 into the fittingly-receiving section 261 of the supporting tube 25, the support-target segment 32 is disposed in opposed relation to an object-side surface of the flange portion 27 of the supporting tube 25. In this embodiment, the holding member body 31 is provided with an elastic dust-protective member 313 which is formed to have a given width and disposed over an entire circumference of the fittingly-inserting section 312. The elastic dust-protective member 313 may be composed of an elongate sheet-shaped member formed of an elastic body such as rubber or urethane, wherein the elongate sheet-shaped member may be attached to the fittingly-inserting section 312 with a double-sided adhesive tape or the like, and interposed between the fittingly-inserting section 312 and the fittingly-receiving section 261 of the supporting tube 25 in a compressively deformed state. The use of the elastic dust-protective member 313 makes it possible to prevent intrusion of fine dust or the like from the object side end of the supporting tube 25 into a space inward of the lens. The elastic dust-protective member 313 is radially compressed over the entire circumference, so that, even when a large impact force is applied to the lens barrel 1, an impact force to be applied to the first lens holding member 3 can be mitigated to suppress an amount of displacement with respect to the supporting tube 25 to thereby suppress degradation in optical performance.

As depicted in FIG. 3, the support-target segment 32 is a circular plate-shaped (ring plate-shaped) member, and formed to protrude radially outwardly from the outer periphery of the holding member body 31 over an entire circumference of the outer periphery of the holding member body 31. The support-target segment 32 includes: three support-target sections 321 supportable, respectively, by the first to third supporting sections 271 to 273 of the supporting tube 25; a first positioning protrusion 322 receivable in the elongate-shaped receiving hole 275; a second positioning protrusion 323 receivable in the circular-shaped receiving hole 276; and an adhesive 324 for bonding the supporting tube 25 and the first lens holding member 3 together.

The support-target sections 321 are disposed at even intervals along a circumferential direction of the support-target segment 32, on the same circle and at the same pitch of the first to third support sections 271 to 273. Each of the support-target sections 321 is composed of a penetration hole through which the supporting bolt 271b penetrates.

As depicted in FIGS. 3 and 8, the first positioning protrusion 322 is composed of a columnar-shaped member having a diameter approximately equal to the width W of the elongate-shaped receiving hole 275, wherein it is formed to protrude from an image-side surface of the support-target segment 32 toward the image side, i.e., toward the flange portion 27, and displaceably inserted into the elongate-shaped receiving hole 275.

The second positioning protrusion 323 takes approximately the same structure as that of the first positioning protrusion 322, and inserted into the circular-shaped receiving hole 276.

The adhesive 324 is provided in the fittingly-receiving section 278a1 and in the adhesive pool section 278b1 which are formed by a gap between the outer peripheral wall of the first positioning protrusion 322 and the inner peripheral wall of the elongate-shaped receiving hole 275, and is provided in the fittingly-receiving section 278a2 and in the adhesive pool section 278b2 which are formed by a gap between the outer peripheral wall of the second positioning protrusion 323 and the inner peripheral wall of the circular-shaped receiving hole 276. In this embodiment, the adhesive is also filled in an auxiliary adhesive filling site 280. More specifically, as depicted in FIGS. 3 to 5, the support-target segment 32 of the first lens holding member 3 further includes a plurality of (in this embodiment, three) auxiliary fittingly-inserting protruding pieces 325. On the other hand, the flange portion 27 of the supporting tube 25 further includes a plurality of (in this embodiment, three) auxiliary protruding-piece receiving holes 279 each receiving therein a respective one of the auxiliary fittingly-inserting protruding pieces 325.

The auxiliary fittingly-inserting protruding pieces 325 are arranged at even intervals along the circumferential direction of the first lens holding member 3. Each of the auxiliary fittingly-inserting protruding pieces 325 takes the same structure as that of the first positioning protrusion 322.

The auxiliary protruding-piece receiving holes 279 are arranged at respective positions corresponding to the auxiliary fittingly-inserting protruding pieces 325. Each of the auxiliary protruding-piece receiving holes 279 takes the same structure as that the circular-shaped receiving hole 276. That is, an inner peripheral wall of each of the auxiliary protruding-piece receiving holes 279 is formed with an auxiliary protruding-piece fittingly-receiving section 279a, and an auxiliary adhesive pool section 279b formed to have a diameter greater than that of the auxiliary protruding-piece fittingly-receiving section 279a.

The auxiliary adhesive filling site 280 is comprised of a gap between the auxiliary fittingly-inserting protruding pieces 325 and the auxiliary protruding-piece fittingly-receiving section 279a, and the auxiliary adhesive pool section 279b, and the adhesive 324 is filled in the auxiliary adhesive filling site 280. It should be noted that, in the figures, the adhesive filled in the auxiliary adhesive filling site 280 is omitted (not depicted).

A first lens set 41 consisting of at least one lens is fittingly inserted into the lens holding section 311 of the first lens holding member 3 constructed as above, so that the first lens set 41 is held by the first lens holding member 3. As depicted in FIGS. 3, 6 and 7, the first lens set 41 held by the first lens holding member 3 is fastened from the object side by a lens latching member 81, so as to be prevented from coming off from the first lens holding member 3. It should be noted that the lens latching member 81 is omitted in FIGS. 1 and 2.

The first lens holding member 3 holding the first lens set 41 is supported by the supporting sections of the supporting tube 25, in such a manner that an inclination thereof is adjustable with respect to an orthogonal-to-optical axis direction which is a direction orthogonal to the optical axis C, as follows.

As depicted in FIG. 7, the first positioning protrusion 322 and the second positioning protrusion 323 are fittingly inserted, respectively, into the elongate-shaped receiving hole 275 and the circular-shaped receiving hole 276 of the supporting tube 25. Through this operation, positioning of the first lens holding member 3 with respect to the supporting tube 25 in the radial direction, i.e., the orthogonal-to-optical axis direction, is performed. When the first positioning protrusion 322 and the second positioning protrusion 323 are fittingly inserted, respectively, into the elongate-shaped receiving hole 275 and the circular-shaped receiving hole 276, each of the auxiliary fittingly-inserting protruding pieces 325 of the first lens holding member 3 is simultaneously fittingly inserted into a respective one of the auxiliary protruding-piece receiving holes 279 of the supporting tube 25. Thus, the position of the first lens holding member 3 with respect to the supporting tube 25 in the radial direction, i.e., the orthogonal-to-optical axis direction, is more reliably set. This attains a state in which each of the support-target sections 321 of the first lens holding member 3 is aligned with a respective one of the supporting holes 271a of the supporting tube 25.

In this state, each of the three supporting bolts 271b is penetratingly inserted into a respective one of the supporting holes 271a from the side of a corresponding one of the support-target sections 321, and threadingly engaged with a corresponding one of the nut members 271c. In this threadingly engaged state and in a state before the supporting bolts 271b are tightly fastened to respective ones of the nut members 271c, i.e., in a state in which there is a gap between the support-target segment 32 and the flange portion 27 of the supporting tube 25 (see FIG. 6), two washers 90 are inserted, respectively, into a gap between the support-target segment 32 and the flange portion 27 of the supporting tube 25 at a position around the first supporting section 271, and a gap between the support-target segment 32 and the flange portion 27 of the supporting tube 25 at a position around the second supporting section 272, as depicted in FIG. 3. This attains a state in which the first lens holding member 3 becomes rotatable (swingable) about a rotational axis PI defined by a line connecting the first supporting section 271 and the second supporting section 272 (a line connecting axes of the supporting bolt 271b of the first supporting section 271 and the supporting bolt 271b of the second supporting section 272), as depicted in FIG. 5.

In this state, as depicted in FIG. 6, a distance t between the support-target segment 32 and the flange portion 27 of the supporting tube 25 at a position around the third supporting section 273 is adjusted, so that an inclination of the first lens holding member 3 with respect to the orthogonal-to-optical axis direction is adjusted. This adjustment is performed, for example, by inserting an inclination adjustment washer 91 having an appropriate plate thickness, into a gap between the support-target segment 32 and the flange portion 27 of the supporting tube 25 at a position around the third supporting section 273 to adjust the distance t between the support-target segment 32 and the flange portion 27 of the supporting tube 25 at a position around the third supporting section 273.

The elongate-shaped receiving hole 275 is formed to extend in the direction Q1 orthogonal to the rotational axis PI as mentioned above. Thus, during rotating movement of the first lens holding member 3 about the rotational axis PI, the first positioning protrusion 322 is relatively displaced with respect to the elongate-shaped receiving hole 275 in a smooth manner, so that it becomes possible to avoid abrasive contact which would otherwise occur in the inner peripheral wall of the protrusion receiving holes 275, 276 due to the first positioning protrusion 322.

After completion of the inclination adjustment, each of the supporting bolts 271b of the first to third supporting sections 271 to 273 is tightly fastened to a respective one of the nut members 271c, so that the first lens holding member 3 is fixed to the supporting tube 25.

Subsequently, the adhesive 324 is filled in the fittingly-receiving section 278a1 and in the adhesive pool section 278b1 concerning the first positioning protrusion 322, and filled in the fittingly-receiving section 278a2 and in the adhesive pool section 278b2 concerning the second positioning protrusion 323. The adhesive is further filled in the auxiliary adhesive filling site 280. Through this operation, the first lens holding member 3 after completion of the inclination adjustment is more strongly fixed to the supporting tube 25. Thus, even when receiving an impact force, the first lens holding member 3 becomes less likely to be displaced with respect to the supporting tube 25.

As depicted in FIGS. 1 and 2, the second lens holding member 4 is configured such that it holds a second lens set 42 consisting of at least one lens, on the side of an inner periphery thereof. The second lens holding member 4 is also configured such that three cam followers 7 are coupled to an outer periphery thereof. These cam followers 7 are arranged at even intervals along the circumferential direction of the circular tube portion 26. The cam followers 7 coupled to the second lens holding member 4 is displaceably received in and engaged with the straight groove 212a of the second fixed tube 212 and the second cam groove 222 of the cam ring 22. In this way, the second lens holding member 4 is displaceably supported by the barrel body 2 through the cam followers 7.

As depicted in FIGS. 1 and 2, the third lens holding member 5 is configured such that it holds a third lens set 43 consisting of at least one lens, on the side of an inner periphery thereof. The third lens holding member 5 is also configured such that three cam followers 7 are coupled to an outer periphery thereof. These cam followers 7 are arranged at even intervals along the circumferential direction of the circular tube portion 26. The third lens holding member 5 comprises, on the image side, a supporting shaft 51 supporting the fourth lens holding member 6. The supporting shaft 51 is disposed to extend along the optical axis direction. The cam followers 7 coupled to the third lens holding member 5 is displaceably received in and engaged with the straight groove 212a of the second fixed tube 212 and the third cam groove 223 of the cam ring 22. In this way, the third lens holding member 5 is displaceably supported by the barrel body 2 through the cam followers 7.

As depicted in FIGS. 1 and 2, the fourth lens holding member 6 is configured such that it holds a fourth lens set 44 consisting of at least one lens, on the side of an inner periphery thereof. The fourth lens holding member 6 is slidably supported by the supporting shaft 51 of the third lens holding member 5. The fourth lens holding member 6 is coupled to a non-depicted drive motor. This drive motor is electrically connected to the aforementioned photosensor connected to the focusing ring 24, and operable to obtain rotation information from the photosensor detecting the rotational direction, the rotational amount rotation and others of the focusing ring 24, and, based on the rotation information, slidingly move the fourth lens holding member 6 toward the object or image side along the supporting shaft 51.

In the lens barrel 1 constructed as above, by rotating the cam ring 22, the cam followers 7 attached to each of the first to third lens holding members 3 to 5 are displaced along the straight groove 212a and a corresponding one of the cam grooves 221 to 223, from a position in the wide end state depicted in FIG. 1 to a position in the telephoto end state depicted in FIG. 2. By manually rotating the focusing ring 24, the fourth lens holding member 6 is displaced along the supporting shaft 51 via the non-depicted photosensor and drive motor.

In the above embodiment, the protrusion receiving holes consist of the single elongate-shaped receiving hole 275 and the single circular-shaped receiving hole 276, and the positioning protrusions consist of the first positioning protrusion 322 receivable in the elongate-shaped receiving hole 275 and the second positioning protrusion 323 receivable in the circular-shaped receiving hole 276. However, the configuration is not limited thereto, but may be appropriately modified.

For example, as depicted in FIGS. 9 and 10, the protrusion receiving holes may consist of three, first to third, elongate-shaped receiving holes 275a, 275b, 275c, and the positioning protrusions may consist of three, first to third, positioning protrusions 322a, 323a, 324a each receivable in a corresponding one of the first to third elongate-shaped receiving holes 275a, 275b, 275c. More specifically, the first elongate-shaped receiving hole 275a is formed to extend in the direction Q1 orthogonal to the rotational axis PI connecting the first supporting section 271 and the second supporting section 272, as mentioned above. The second elongate-shaped receiving hole 275b is formed to extend in a direction Q2 orthogonal to a rotational axis P2 connecting the second supporting section 272 and the third supporting section 273. The third elongate-shaped receiving hole 275c is formed to extend in a direction Q3 orthogonal to a rotational axis P3 connecting the third supporting section 273 and the first supporting section 271.

By constructing the lens barrel as above, even when the first lens holding member 3 is rotatingly moved about each of the rotational axes PI, P2, P3, each of the first to third positioning protrusions 322a, 323a, 324a received in a corresponding one of the first to third elongate-shaped receiving holes 275a, 275b, 275c can be displaced within the corresponding one of the first to third elongate-shaped receiving holes 275a, 275b, 275c. Thus, in the case where the inclination of the first lens holding member 3 is adjusted at three areas in the circumferential direction thereof, it is possible to avoid abrasive contact due to each of the first to third positioning protrusions 322a, 323a, 324a.

When the first lens holding member 3 is assembled to the supporting tube 25, the first lens holding member 3 can be rotated about the optical axis with respect to the supporting tube 25, so as to support each of the support-target sections by a respective one of the first to third supporting sections. This makes it possible to facilitate assembling operation. The inclination of the first lens holding member with respect to the barrel body can be adjusted by rotating the first lens holding member about the optical axis with respect to the supporting tube, and by aligning the first to third supporting sections and the support-target sections having a minimum degradation of optical performance due to a shift-induced error..

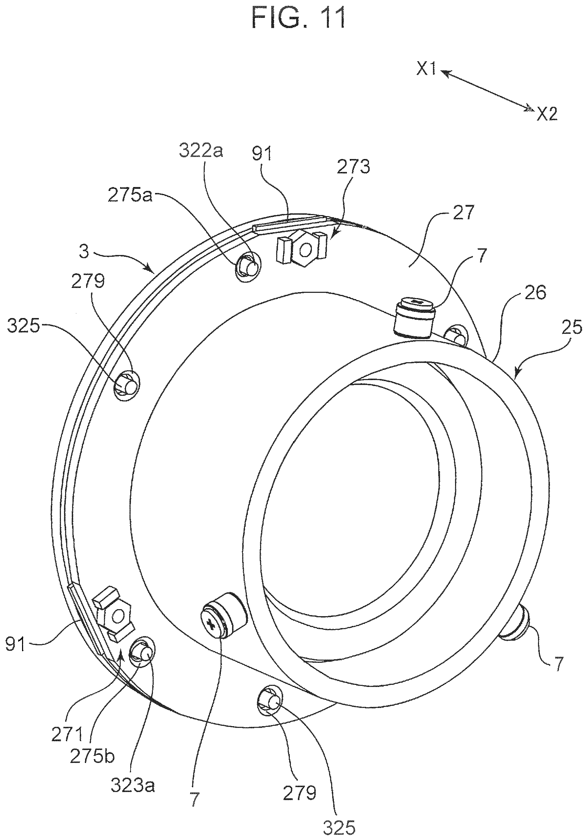

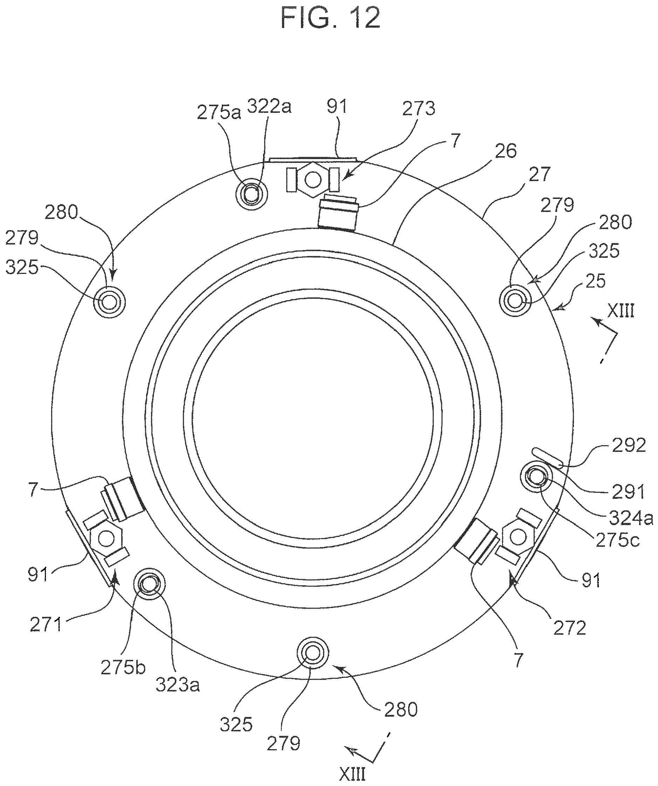

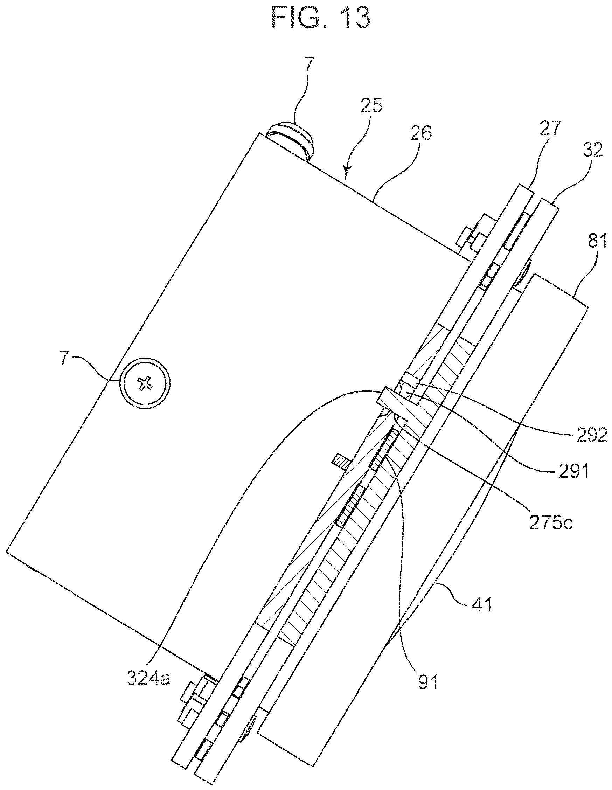

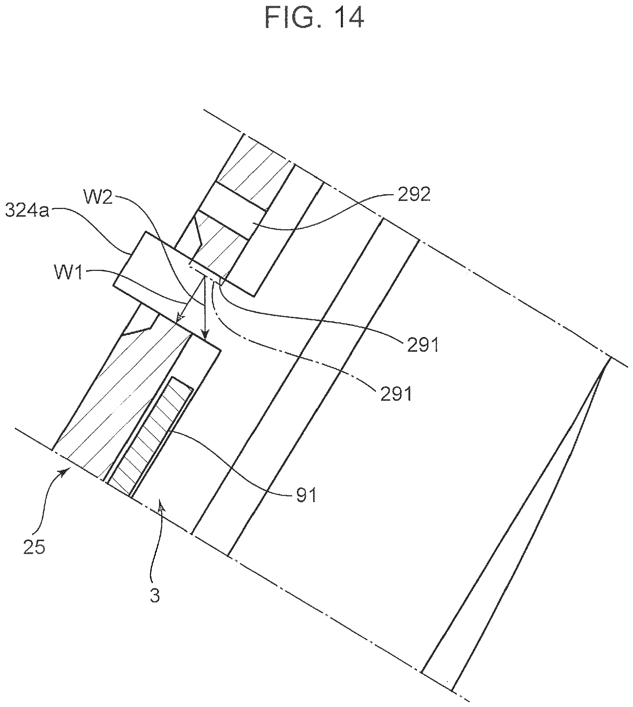

The lens barrel may further includes an elastic piece (biasing portion) 291 for biasing the barrel body 2 in a given direction with respect to the first lens holding member 3. More specifically, in one example, as depicted in FIGS. 11 to 14, the first lens holding member 3 includes an elastic segment 291 having elasticity capable of biasing a positioning protrusion 324a received in the third elongate-shaped receiving hole 275c, and an elongate-shaped elasticity imparting hole 292 formed on a side opposite to the third elongate-shaped receiving hole 275c across the elastic segment 291.

The elastic segment 291 is formed of a part of the first lens holding member 3 in such a manner that, during operation of causing the positioning protrusion 324a to be received in the third elongate-shaped receiving hole 275c, it is pushed by an outer periphery of the positioning protrusion 324a so as to undergo elastic deformation, and operable to bias the outer periphery of the positioning protrusion 324a by an elastic force (biasing force) W arising from the elastic deformation. The elastic segment 291 is formed such that, when the optical axis of the barrel body 2 holding the first lens holding member 3 is in a horizontal state, a biasing force W1 for biasing the barrel body 2 with respect to the first lens holding member 3 has a gravitational directional component W2 in the same direction as a gravitational direction of the barrel body 2.

The elasticity imparting hole 292 is formed by cutting out a part of the lens holding member, so as to enable the elastic segment 291 to be elastically deformed along with the operation of causing the positioning protrusion 324a to be received in the third elongate-shaped receiving hole 275c.

By constructing the lens barrel as above, during the operation of adjusting the inclination of the first lens holding member, it becomes possible to suppress the occurrence of a small displacement of the supporting tube with respect to the first lens holding member, and thus adjust the inclination easily and accurately. The elastic segment 291 is composed of a part of the first lens holding member 3 formed between the elasticity imparting hole 292 and the positioning protrusion 324a by forming the elasticity imparting hole 292 in the first lens holding member 3. Thus, this lens barrel 1 makes it possible to eliminate a need for additionally providing a biasing member, so that it becomes possible to reduce the number of components and facilitate a reduction in cost.

The elastic segment 291 is formed such that, when the lens barrel 1 is in a basic posture where the optical axis of the barrel body 2 is in a horizontal state, a biasing force W1 of the elastic segment 291 has a gravitational directional component W2 in the same direction as a gravitational direction of the barrel body 2, as mentioned above. Thus, this lens barrel 1 makes it possible to efficiently bias the barrel body with respect to the first lens holding member 3 so as to absorb a play therebetween, thereby reliably suppressing a play between the first lens holding member 3 and the barrel body 2.

In the above embodiment, the first lens holding member 3 has the positioning protrusions, and the supporting tube 25 of the barrel body 2 has the protrusion receiving holes. However, the configuration is not limited thereto, but may be appropriately modified. For example, the first lens holding member 3 may have the protrusion receiving holes, and the supporting tube 25 of the barrel body 2 may have the positioning protrusions.

In the above embodiment, the inclination adjustment is performed using the inclination adjustment washer 91. However, the adjustment mechanism is not limited thereto, but may be appropriately modified. For example, the adjustment mechanism may be constructed using a bolt. Specifically, the inclination adjustment may be performed by changing a gap at the adjustment position according to rotation of the bolt. Further, as one example of using the inclination adjustment washer 91, the above embodiment employs a washer having a U-shaped cutout. However, the inclination adjustment washer 91 is not limited to such a washer having a U-shaped cutout, but may be appropriately modified. For all that, a washer having a cutout is preferable as the inclination adjustment 91, because a member having a cutout makes it possible to perform insertion and pulling-out thereof from a radially outward side, thereby achieving good working efficiency.

The specification discloses the aforementioned arrangements. The following is a summary of the primary arrangements of the embodiments.

In one aspect of the embodiments, there is provided a lens barrel which includes a lens holding member holding at least one lens, and a barrel body supporting the lens holding member in such a manner that an inclination of the lens holding member is adjustable with respect to an orthogonal-to-optical axis direction which is a direction orthogonal to an optical axis of the lens barrel. One of the barrel body and the lens holding member includes a plurality of positioning protrusions for positioning the lens holding member with respect to the barrel body in the orthogonal-to-optical axis direction. The remaining one of the barrel body and the holding member includes a plurality of protrusion receiving holes each receiving therein a respective one of the positioning protrusions. Further, the protrusion receiving holes include at least one elongate-shaped receiving hole formed to extend in given one direction so as to displaceably receive therein a corresponding one of the positioning protrusions.

In the lens barrel having this feature, the position of the lens holding member with respect to the barrel body in the orthogonal-to-optical axis direction is set by causing each of the plurality of positioning protrusions to be received in a respective one of the protrusion receiving holes, so that each of the positioning protrusion and the protrusion receiving hole can be formed to have a diameter less than that of the lens holding member, and a difference between the diameters of the positioning protrusion and the protrusion receiving hole can be reduced in production with a general tolerance. Thus, this lens barrel makes it possible to set the position of the lens holding member with respect to the barrel body in the orthogonal-to-optical axis direction, easily with a high degree of accuracy.

The protrusion receiving holes includes at least one elongate-shaped receiving hole formed to extend in given one direction so as to displaceably receive therein a corresponding one of the positioning protrusions, so that, even in a situation where a slight misalignment occurs between the positioning protrusion and the protrusion receiving hole due to production errors during production thereof, or the like, the positioning protrusion can be received in the protrusion receiving hole without abrasive contact. Thus, this lens barrel makes it possible to avoid abrasive contact between the positioning protrusion and the protrusion receiving hole, and adjust the inclination of the lens holding member with respect to the orthogonal-to-optical axis direction, smoothly and accurately.

According to another aspect of the embodiments, in the above lens barrel, the barrel body includes a supporting tube supporting the lens holding member, wherein the supporting tube includes at least two supporting sections disposed in spaced-apart relation to each other to support the lens holding member. The lens holding member includes at least two support-target sections each supported by a respective one of the at least two supporting sections, wherein the at least two support-target sections are supported such that, during operation of supporting the at least two support-target sections by respective ones of the at least two supporting sections, the first lens holding member is rotatable about a rotational axis defined by a line connecting two of the at least two supporting sections, so as to adjust the inclination. The one direction which is a longitudinal direction of the elongate-shaped receiving hole is approximately (substantially) orthogonal to the rotational axis.

In the lens barrel having this feature, the inclination of the lens holding member with respect to the barrel body can be adjusted by rotating movement of the lens holding member about the rotational axis, so that it becomes possible to easily adjust the inclination of the lens holding member.

The one direction which is a longitudinal direction of the elongate-shaped receiving hole is approximately orthogonal to the rotational axis. Thus, in this lens barrel, the positioning protrusion can be displaced within the elongate-shaped receiving hole during the rotating movement of the first lens holding member about the rotational axis, so that it becomes possible to reliably avoid abrasive contact between the positioning protrusion and the protrusion receiving hole.

According to another aspect of the embodiments, in the above lens barrel, the protrusion receiving holes consists of three elongate-shaped receiving holes: a first elongate-shaped receiving hole; a second elongate-shaped receiving hole; and a third elongate-shaped receiving hole, which are arranged at approximately (substantially) even intervals in a circumferential direction as the other direction.

In the lens barrel having this feature, it becomes possible to more reliably avoid abrasive contact between the positioning protrusion and the protrusion receiving hole.

According to another aspect of the embodiments, in the above lens barrel, the barrel body includes a supporting tube supporting the lens holding member. The supporting tube includes three supporting sections disposed in spaced-apart relation to each other to support the lens holding member, wherein the supporting sections consist of a first supporting section, a second supporting section and a third supporting section which are arranged along the circumferential direction of the barrel body. The lens holding member includes three support-target sections each supported by a respective one of the three supporting sections, wherein the three support-target sections are supported such that, during operation of supporting the three support-target sections by respective ones of the three supporting sections, the lens holding member is rotatable about each of a first rotational axis defined by a line connecting the first supporting section and the second supporting section, a second rotational axis defined by a line connecting the second supporting section and the third supporting section, and a third rotational axis defined by a line connecting the third supporting section and the first supporting section. Further, a longitudinal direction of the first elongate-shaped receiving hole, a longitudinal direction of the second elongate-shaped receiving hole, and a longitudinal direction of the third elongate-shaped receiving hole, are approximately (substantially) orthogonal, respectively, to the first rotational axis, the second rotational axis and the third rotational axis.

In the lens barrel having this feature, even when the lens holding member is rotatingly moved about each of the first to third rotational axes, the positioning protrusions each received in a respective one of the first to third elongate-shaped receiving holes can be displaced, respectively, within the first to third elongate-shaped receiving holes. Thus, this lens barrel makes it possible to avoid abrasive contact due to the positioning protrusion when the inclination of the lens holding member is adjusted at three areas in the circumferential direction thereof.

According to another aspect of the embodiments, in the above lens barrel, the first supporting section, the second supporting section and the third supporting section are arranged at approximately even intervals in a circumferential direction of the barrel body. The support-target sections are arranged at approximately (substantially) even intervals in a circumferential direction of the lens holding member in such a manner that each of them is selectively supported by a respective one of the first supporting section, the second supporting section and the third supporting section.

In the lens barrel having this feature, during operation of assembling the lens holding member to the supporting tube, each of the support-target sections can be selectively supported by a respective one of the first to third supporting sections by rotating the lens holding member about the optical axis with respect to the supporting tube. This makes it possible to facilitate assembling operation. The inclination of the lens holding member with respect to the barrel body can be adjusted by rotating the lens holding member about the optical axis with respect to the supporting tube, and by aligning the support-target sections having a minimum degradation of optical performance due to a shift-induced error and the first to third supporting sections.

According to another aspect of the embodiments, the above lens barrel further includes an adhesive bonding corresponding ones of the positioning protrusions and the protrusion receiving holes together, wherein the adhesive is filled in a gap between an outer periphery of each of the positioning protrusions and an inner peripheral wall of a corresponding one of the protrusion receiving holes.

In the lens barrel having this feature, even when the lens barrel receives an impact force after completion of the inclination adjustment for the lens holding member, a displacement of the lens holding member having an adjusted inclination with respect to the orthogonal-to-optical axis direction can be suppressed, so that it becomes possible to strongly hold the lens holding member to the barrel body.

According to another aspect of the embodiments, in the above lens barrel, the inner peripheral wall of each of the protrusion receiving holes has an adhesive pool section for retaining the adhesive, wherein the adhesive is retained in the adhesive pool section.

In the lens barrel having this feature, it becomes possible to more strongly hold the lens holding member to the barrel body.

According to another aspect of the embodiments, the above lens barrel further includes a biasing portion for biasing the barrel body in a given direction with respect to the lens holding member.

In the lens barrel having this feature, it becomes possible to suppress the occurrence of a small displacement of the supporting tube with respect to the lens holding member, and thus adjust the inclination easily and accurately.

According to another aspect of the embodiments, in the above lens barrel, the lens holding member includes an elastic segment having elasticity capable of biasing one of the positioning protrusions received in a corresponding one of the protrusion receiving holes, and an elasticity imparting hole formed on a side opposite to the protrusion receiving hole across the elastic segment. The elastic segment is formed such that, during operation of causing the positioning protrusion to be received in the protrusion receiving hole, it is pushed by an outer periphery of the positioning protrusion so as to undergo elastic deformation, and operable to bias the outer periphery of the positioning protrusion by an elastic force arising from the elastic deformation. The elasticity imparting hole is formed in a part of the lens holding member so as to enable the elastic segment to be elastically deformed along with the operation of causing the positioning protrusion to be received in the protrusion receiving hole, wherein the biasing portion consists of the elastic segment.

In the lens barrel having this feature, a part of the lens holding member between the protrusion receiving hole and the positioning protrusion serves as the elastic segment. Thus, it becomes possible to eliminate a need for additionally providing a biasing member, thereby reducing the number of components to facilitate a reduction in cost.

According to another aspect of the embodiments, in the above lens barrel, the biasing portion is formed such that, when the optical axis of the barrel body holding the lens holding member is in a horizontal state, a biasing force for biasing the barrel body with respect to the lens holding member has a gravitational directional component in the same direction as a gravitational direction of the barrel body.

In this lens barrel, the biasing portion is formed such that, when the lens barrel is in a basic posture where the optical axis of the barrel body is in a horizontal state, the biasing portion has a gravitational directional component in the same direction as a gravitational direction of the barrel body. Thus, this lens barrel makes it possible to efficiently bias the barrel body with respect to the lens holding member so as to absorb a play therebetween, thereby reliably suppressing a play between the lens holding member and the barrel body.

This application is based on Japanese Patent application No. 2016-55025 filed in Japan Patent Office on March 18, 2016.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A lens barrel comprising a lens holding member (3) holding at least one lens, and a barrel body (2) supporting the lens holding member (3) in such a manner that an inclination of the lens holding member is adjustable with respect to an orthogonal-to-optical axis direction which is a direction orthogonal to an optical axis of the lens barrel,
wherein
one of the barrel body and the lens holding member comprises a plurality of positioning protrusions (322, 323, 322a, 323a, 324a) for positioning the lens holding member with respect to the barrel body in the orthogonal-to-optical axis direction, and
the remaining one of the barrel body and the lens holding member comprises a plurality of protrusion receiving holes (275, 276, 275a to 275c) each receiving therein a respective one of the positioning protrusions, the protrusion receiving holes including at least one elongate-shaped receiving hole (275, 275a to 275c) formed to extend in given one direction so as to displaceably receive therein a corresponding one of the positioning protrusions,
wherein:
the barrel body (2) comprises a supporting tube (25) supporting the lens member (3), the supporting tube comprising at least two supporting sections (271 to 273) disposed in spaced-apart relation to each other to support the lens holding member; and
the lens holding member comprises at least two support-target sections (321) each supported by a respective one of the at least two supporting sections, the at least two support-target sections being supported such that, during operation of supporting the at least two support-target sections by respective ones of the at least two supporting sections, the lens holding member is rotatable about a rotational axis defined by a line connecting two of the at least two supporting sections, so as to adjust the inclination,
and wherein the one direction which is a longitudinal direction of the elongate-shaped receiving hole (275, 275a to 275c) is approximately orthogonal to the rotational axis.

2. The lens barrel as recited in claim 1, wherein the protrusion receiving holes (275a to 275c) consists of three elongate-shaped receiving holes: a first elongate-shaped receiving hole (275a); a second elongate-shaped receiving hole (275b); and a third elongate-shaped receiving hole (275c), which are arranged at approximately even intervals in a circumferential direction as the other direction.

3. The lens barrel as recited in claim 2, wherein:
the barrel body (2) comprises a supporting tube (25) supporting the lens member (3), the supporting tube (25) comprising three supporting sections (271 to 273) disposed in spaced-apart relation to each other to support the lens holding member, the supporting sections consisting of a first supporting section (271), a second supporting section (272) and a third supporting section (273) which are arranged along the circumferential direction of the barrel body; and
the lens holding member comprises three support-target sections (321) each supported by a respective one of the three supporting sections, the three support-target sections being supported such that, during operation of supporting the three support-target sections by respective ones of the three supporting sections, the lens holding member is rotatable about each of a first rotational axis defined by a line connecting the first supporting section and the second supporting section, a second rotational axis defined by a line connecting the second supporting section and the third supporting section, and a third rotational axis defined by a line connecting the third supporting section and the first supporting section,
and wherein;
a longitudinal direction of the first elongate-shaped receiving hole (275a) is approximately orthogonal to the first rotational axis;
a longitudinal direction of the second elongate-shaped receiving hole (275b) is approximately orthogonal to the second rotational axis; and
a longitudinal direction of the third elongate-shaped receiving hole (275c) is approximately orthogonal to the third rotational axis.

4. The lens barrel as recited in claim 3, wherein
the first supporting section (271), the second supporting section (272) and the third supporting section (273) are arranged at approximately even intervals in a circumferential direction of the barrel body, and
the support-target sections (321) are arranged at approximately even intervals in a circumferential direction of the lens holding member (3) in such a manner that each of them is selectively supported by a respective one of the first supporting section, the second supporting section and the third supporting section.

5. The lens barrel as recited in any one of claims 1 to 4, which further comprises an adhesive bonding corresponding ones of the positioning protrusions (322, 323, 322a, 323a, 324a) and the protrusion receiving holes (275, 276, 275a to 275c) together, wherein the adhesive is filled in a gap between an outer periphery of each of the positioning protrusions and an inner peripheral wall of a corresponding one of the protrusion receiving holes.

6. The lens barrel as recited in claim 5, wherein the inner peripheral wall of each of the protrusion receiving holes (275, 276, 275a to 275c) has an adhesive pool section (278b,278b1,278b2) for retaining the adhesive, wherein the adhesive is retained in the adhesive pool section.

7. The lens barrel as recited in any one of claims 1 to 6, which further comprises a biasing portion (291) for biasing the barrel body (2) in a given direction with respect to the lens holding member.

8. The lens barrel as recited in claim 7, wherein the lens holding member (3) comprises an elastic segment (291) having elasticity capable of biasing one (324a) of the positioning protrusions received in a corresponding one (275c) of the protrusion receiving holes, and an elasticity imparting hole (272) formed on a side opposite to the protrusion receiving hole across the elastic segment, wherein
the elastic segment being formed such that, during operation of causing the positioning protrusion to be received in the protrusion receiving hole, it is pushed by an outer periphery of the positioning protrusion so as to undergo elastic deformation, and operable to bias the outer periphery of the positioning protrusion by an elastic force arising from the elastic deformation, and
the elasticity imparting hole is formed in a part of the lens holding member so as to enable the elastic segment to be elastically deformed along with the operation of causing the positioning protrusion to be received in the protrusion receiving hole,
and wherein the biasing portion consists of the elastic segment.

9. The lens barrel as recited in claim 7 or 8, wherein the biasing portion (291) is formed such that, when the optical axis of the barrel body (2) holding the lens holding member (3) is in a horizontal state, a biasing force for biasing the barrel body with respect to the lens holding member has a gravitational directional component in the same direction as a gravitational direction of the barrel body.

## Patentansprüche

1. Objektivtubus mit einem Objektivhalteelement (3), das zumindest ein Objektiv hält, und einem Tubuskörper (2), der das Objektivhalteelement (3) derart trägt, dass eine Neigung des Objektivhalteelements (3) bezüglich einer zur optischen Achse orthogonalen Richtung einstellbar ist, welche eine Richtung ist, die orthogonal zu einer optischen Achse des Objektivtubus liegt,
wobei
ein Element aus dem Objektivtubus und dem Objektivhalteelement eine Vielzahl von Positionierungsvorsprüngen (322, 323, 322a, 323a, 324a) zur Positionierung des Objektivhalteelements gegenüber dem Objektivtubus in der zur optischen Achse orthogonalen Richtung aufweist, und
das andere Element aus dem Objektivtubus und dem Objektivhalteelement eine Vielzahl von Vorsprungsaufnahmelöchern (275, 276, 275a bis 275c) aufweist, welche jeweils darin einen jeweiligen der Positionierungsvorsprünge aufnehmen, wobei die Vorsprungsaufnahmelöcher zumindest ein länglich geformtes Aufnahmeloch (275, 275a bis 275c) umfassen, das derart ausgebildet ist, dass es sich in einer gegebenen Richtung erstreckt, um darin einen entsprechenden der Positionierungsvorsprünge verschiebbar aufzunehmen,
wobei:
der Tubuskörper (2) ein Tragrohr (25) aufweist, welches das Objektivelement (3) trägt, wobei das Tragrohr zumindest zwei Tragabschnitte (271 bis 273) aufweist, die voneinander beabstandet angeordnet sind, um das Objektivhalteelement zu tragen; und
das Objektivhalteelement zumindest zwei Zieltragabschnitte (321) aufweist, die jeweils von einem jeweiligen der zumindest zwei Tragabschnitte getragen sind, wobei die zumindest zwei Zieltragabschnitte derart getragen sind, dass während des Vorgangs des Tragens der zumindest zwei Zieltragabschnitte von einem jeweiligen der zumindest zwei Tragabschnitte, das Objektivhalteelement drehbar um eine Drehachse gelagert ist, die von einer zwei der zumindest zwei Tragabschnitte miteinander verbindenden Linie definiert ist, um die Neigung einzustellen,
und wobei die eine Richtung, welche eine Längsrichtung des länglich geformten Aufnahmeloches (275, 275a bis 275c) ist, ungefähr orthogonal zu der Drehachse liegt.

2. Objektivtubus gemäß Anspruch 1, wobei die Vorsprungsaufnahmelächer (275a bis 275c) aus drei länglich geformten Aufnahmelöchern bestehen: einem ersten länglich geformten Aufnahmeloch (275a); einem zweiten länglich geformten Aufnahmeloch (275b); und einem dritten länglich geformten Aufnahmeloch (275c), die in ungefähr gleichen Abständen in einer Umfangsrichtung als die andere Richtung angeordnet sind.

3. Objektivtubus gemäß Anspruch 2, wobei:
der Tubuskörper (2) ein Tragrohr (25) aufweist, welches das Objektivelement (3) trägt, wobei das Tragrohr drei Tragabschnitte (271 bis 273) aufweist, die voneinander beabstandet angeordnet sind, um das Objektivhalteelement zu tragen, wobei die Tragabschnitte aus einem ersten Tragabschnitt (271), einem zweiten Tragabschnitt (272) und einem dritten Tragabschnitt (273) bestehen, die entlang der Umfangsrichtung des Tubuskörpers angeordnet sind; und
das Objektivhalteelement drei Zieltragabschnitte (321) aufweist, die jeweils von einem jeweiligen der drei Tragabschnitte getragen sind, wobei die drei Zieltragabschnitte derart getragen sind, dass während des Vorgangs des Tragens der drei Zieltragabschnitte von einem jeweiligen der drei Tragabschnitte, das Objektivhalteelement drehbar um eine jeweilige einer ersten Drehachse gelagert ist, die von einer den ersten Tragabschnitt und den zweiten Tragabschnitt miteinander verbindenden Linie definiert ist, einer zweiten Drehachse, die von einer den zweiten Tragabschnitt und den dritten Tragabschnitt miteinander verbindenden Linie definiert ist, und einer dritten Drehachse, die von einer den dritten Tragabschnitt und den ersten Tragabschnitt miteinander verbindenden Linie definiert ist,
und wobei:
eine Längsrichtung des ersten länglich geformten Aufnahmelochs (275a) ungefähr orthogonal zu der ersten Drehachse liegt;
eine Längsrichtung des zweiten länglich geformten Aufnahmelochs (275b) ungefähr orthogonal zu der zweiten Drehachse liegt; und
eine Längsrichtung des dritten länglich geformten Aufnahmelochs (275c) ungefähr orthogonal zu der dritten Drehachse liegt.

4. Objektivtubus gemäß Anspruch 3, wobei:
der erste Tragabschnitt (271), der zweite Tragabschnitt (272) und der dritte Tragabschnitt (273) in ungefähr gleichen Abständen in einer Umfangsrichtung des Tubuskörpers angeordnet sind, und
die Zieltragabschnitte (321) in ungefähr gleichen Abständen in einer Umfangsrichtung des Objektivhalteelements (3) derart angeordnet sind, dass jeder von ihnen selektiv von einem jeweiligen des ersten Tragabschnitts, des zweite Tragabschnitts und des dritten Tragabschnitts getragen ist.

5. Objektivtubus gemäß irgendeinem der Ansprüche 1 bis 4, der ferner einen Klebstoff aufweist, welcher entsprechende der Positionierungsvorsprünge (322, 323, 322a, 323a, 324a) und der Vorspungsaufnahmelöcher (275, 276, 275a bis 275c) miteinander verbindet, wobei der Klebstoff in einen Spalt zwischen einem Außenumfang eines jeden der Positionierungsvorsprünge und einer inneren Umfangswand eines entsprechenden der Vorspungsaufnahmelöcher gefüllt wird.

6. Objektivtubus gemäß Anspruch 5, wobei die innere Umfangswand eines jeden der Vorspungsaufnahmelöcher (275, 276, 275a bis 275c) einen Klebstoffbeckenabschnitt (278b, 278b1, 278b2) zum Auffangen des Klebstoffs aufweist, wobei der Klebstoff in dem Klebstoffbeckenabschnitt aufbewahrt ist.

7. Objektivtubus gemäß irgendeinem der Ansprüche 1 bis 6, der ferner einen Neigungsbereich (291) aufweist, um den Tubuskörper (2) in eine gegebene Richtung bezüglich des Objektivhalteelements zu neigen.

8. Objektivtubus gemäß Anspruch 7, wobei das Objektivhalteelement (3) einen elastischen Bereich (291) aufweist, der eine Elastizität hat, die in der Lage ist, einen (324a) der Positionierungsvorsprünge, der in einem entsprechenden (275c) der Vorspungsaufnahmelöcher aufgenommen ist, zu neigen, und ein Elastizität verleihendes Loch (272), das auf einer Seite gegenüber dem Vorspungsaufnahmeloch quer über den elastischen Bereich ausgebildet ist, wobei:
der elastische Bereich derart ausgebildet ist, dass er während des Vorgangs der Aufnahme des Positionierungsvorsprungs in dem Vorspungsaufnahmeloch von einem Außenumfang des Positionierungsvorsprungs derart gedrückt wird, dass er eine elastische Verformung erfährt, und er dazu ausgelegt ist, den Außenumfang des Positionierungsvorsprungs durch eine von der elastischen Verformung herrührende elastische Kraft zu neigen, und
das Elastizität verleihende Loch in einem Bereich des Objektivhalteelements so ausgebildet ist, dass der elastische Bereich gleichzeitig mit dem Vorgang der Aufnahme des Positionierungsvorsprungs in dem Vorspungsaufnahmeloch elastisch verformt werden kann,
und wobei der Neigungsbereich aus dem elastischen Bereich besteht.

9. Objektivtubus gemäß Anspruch 7 oder 8, wobei der Neigungsbereich (291) derart ausgebildet ist, dass wenn sich die optische Achse des das Objektivhalteelement (3) haltenden Tubuskörpers (2) in einer horizontalen Lage befindet, eine Schrägstellkraft zum Neigen des Tubuskörpers bezüglich des Objektivhalteelementes eine Gravitations-Richtungskomponente in der gleichen Richtung wie eine Gravitationsrichtung des Tubuskörpers aufweist.

## Revendications

1. Tube de lentille comprenant un élément de support de lentille (3), qui retient au moins une lentille, et un corps de tube (2), qui porte l'élément de support de lentille (3) de sorte qu'une inclinaison de l'élément de support de lentille est réglable par rapport à une direction orthogonale à l'axe optique, qui est une direction orthogonale à un axe optique du tube de lentille,
dans lequel
un élément parmi le corps de tube et l'élément de support de lentille comprend une pluralité de saillies de positionnement (322, 323, 322a, 323a, 324a) pour positionner l'élément de support de lentille par rapport au corps de tube dans la direction orthogonale à l'axe optique, et
l'autre élément parmi le corps de tube et l'élément de support de lentille comprend une pluralité de trous de réception de saillie (275, 276, 275a à 275c), dont chacun reçoit une saillie respective des saillies de positionnement, les trous de réception de saillie comprenant au moins un trou de réception en forme allongée (275, 275a à 275c) formé de sorte qu'il s'étend dans une direction donnée pour recevoir de manière déplaçable une saillie correspondante des saillies de positionnement,
dans lequel
le corps de tube (2) comprend un tube de support (25), qui porte l'élément de lentille (3), le tube de support comprenant au moins deux sections de support (271 à 273) disposées de manière espacée l'une de l'autre pour porter l'élément de support de lentille ; et
l'élément de support de lentille comprend au moins deux sections de support cibles (321), dont chacune est portée par une section respective des au moins deux sections de support, les au moins deux sections de support cibles étant portées de sorte que pendant l'action de porter les au moins deux sections de support cibles par moyen des sections respectives des au moins deux sections de support, l'élément de support de lentille peut tourner autour d'un axe de rotation défini par une ligne, qui relie deux des au moins deux sections de support, de sorte que l'inclinaison est réglée,
et dans lequel l'une direction, qui est une direction longitudinale du trou de réception en forme allongée (275, 275a à 275c) est environ orthogonale à l'axe de rotation.

2. Tube de lentille selon la revendication 1, dans lequel les trous de réception de saillie (275 à 275c) consistent en trois trous de réception en forme allongée : un premier trou de réception en forme allongée (275a) ; un deuxième trou de réception en forme allongée (275b) ; et un troisième trou de réception en forme allongée (275c), lesquels sont disposés à des intervalles approximativement réguliers dans une direction circonférentielle comme l'autre direction.

3. Tube de lentille selon la revendication 2, dans lequel :
le corps de tube (2) comprend un tube de support (25), qui porte l'élément de lentille (3), le tube de support (25) comprenant trois sections de support (271 à 273) disposées de manière espacée l'une de l'autre pour porter l'élément de support de lentille, les sections de support consistant en une première section de support (271), en une deuxième section de support (272) et en une troisième section de support (273), lesquels sont disposés le long de la direction circonférentielle du corps de tube ; et
l'élément de support de lentille comprend trois sections de support cibles (321), dont chacune est portée par une section respective des trois sections de support, les trois sections de support cibles étant portées de sorte que pendant l'action de porter les trois sections de support cibles par moyen des sections respectives des trois sections de support, l'élément de support de lentille peut tourner autour de chacun parmi un premier axe de rotation défini par une ligne, qui relie la première section de support et la deuxième section de support, un deuxième axe de rotation défini par une ligne, qui relie la deuxième section de support et la troisième section de support, et un troisième axe de rotation défini par une ligne, qui relie la troisième section de support et la première section de support,
et dans lequel
une direction longitudinale du premier trou de réception en forme allongée (275a) est approximativement orthogonale au premier axe de rotation ;
une direction longitudinale du deuxième trou de réception en forme allongée (275b) est approximativement orthogonale au deuxième axe de rotation ; et
une direction longitudinale du troisième trou de réception en forme allongée (275c) est approximativement orthogonale au troisième axe de rotation.

4. Tube de lentille selon la revendication 3, dans lequel :
la première section de support (271), la deuxième section de support (272) et la troisième section de support (273) sont disposées à des intervalles approximativement réguliers dans une direction circonférentielle du corps de tube ; et
les sections de support cibles (321) sont disposées à des intervalles approximativement réguliers dans une direction circonférentielle de l'élément de support de lentille (3) de sorte que chacune d'elles est sélectivement portée par une section respective de la première section de support, de la deuxième section de support et de la troisième section de support.

5. Tube de lentille selon l'une quelconque des revendications 1 à 4, qui comprend en outre un adhésif, qui relie les saillies de positionnement (322, 323, 322a, 323a, 324a) correspondantes aux trous de réception de saillie (275, 276, 275a à 275c) correspondants, dans lequel l'adhésif est introduit dans une fente entre une périphérie extérieure de chacune des saillies de positionnement et une paroi de périphérie intérieure d'un trou correspondant des trous de réception de saillie.

6. Tube de lentille selon la revendication 5, dans lequel la paroi de périphérie intérieure de chacun des trous de réception de saillie (275, 276, 275a à 275c) comprend une section de bassin d'adhésif (178b, 278b1, 278b2) pour garder l'adhésif, l'adhésif étant gardé dans la section de bassin d'adhésif.

7. Tube de lentille selon l'une quelconque des revendications 1 à 6, qui comprend en outre une partie d'inclinaison (291) pour incliner le corps de tube (2) dans une direction donnée par rapport à l'élément de support de lentille.

8. Tube de lentille selon la revendication 7, dans lequel l'élément de support de lentille (3) comprend un segment élastique (291) comprenant une élasticité, qui est capable d'incliner une (324a) des saillies de positionnement reçues dans un trou correspondant (275c) des trous de réception de saillie, et un trou de transmission d'élasticité (272) formé sur un côté opposé au trou de réception de saillie à travers le segment élastique, dans lequel
le segment élastique est formé de sorte que pendant l'étape de la réception de la saillie de positionnement dans le trou de réception de saillie, celui-ci est pressé par une périphérie extérieure de la saillie de positionnement de sorte qu'il subit une déformation élastique et de sorte qu'il peut incliner la périphérie extérieure de la saillie de positionnement par moyen d'une force élastique, qui résulte de la déformation élastique, et
le trou de transmission d'élasticité est formé dans une partie de l'élément de support de lentille, de sorte qu'il permet au segment élastique d'être déformé élastiquement pendant l'étape de réception de la saillie de positionnement dans le trou de réception de saillie,
et dans lequel la partie d'inclinaison est constituée par le segment élastique.

9. Tube de lentille selon la revendication 7 ou la revendication 8, dans lequel la partie d'inclinaison (291) est formée de sorte que si l'axe optique du corps de tube (2), qui retient l'élément de support de lentille (3), se trouve dans l'état horizontal, une force d'inclinaison pour incliner le corps de tube par rapport à l'élément de support de lentille comprend un composant directionnel de gravitation dans la même direction qu'une direction de gravitation du corps de tube.
